(19) **Europäisches Patentamt / European Patent Office / Office européen des brevets**

(11) **EP 4 615 120 A1**

(12) **EUROPEAN PATENT APPLICATION**
published in accordance with Art. 153(4) EPC

(43) Date of publication:
**10.09.2025   Bulletin 2025/37**

(21) Application number: **23886268.4**

(22) Date of filing: **01.11.2023**

(51) International Patent Classification (IPC):
**H04W 72/23** (2023.01)   **H04W 72/21** (2023.01)
**H04W 72/04** (2023.01)   **H04W 8/24** (2009.01)
**H04L 5/00** (2006.01)

(52) Cooperative Patent Classification (CPC):
**H04L 5/00; H04W 8/24; H04W 72/04; H04W 72/21;
H04W 72/23**

(86) International application number:
**PCT/KR2023/017264**

(87) International publication number:
**WO 2024/096572 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **04.11.2022   KR 20220146534**

(71) Applicant: **LG Electronics Inc.
Yeongdeungpo-gu
Seoul 07336 (KR)**

(72) Inventors:
• **CHOI, Seunghwan**
  **Seoul 06772 (KR)**
• **YANG, Suckchel**
  **Seoul 06772 (KR)**
• **KIM, Seonwook**
  **Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR TRANSMITTING/RECEIVING SIGNALS IN WIRELESS COMMUNICATION SYSTEM**

(57)   A method and a device for transmitting/receiving signals in a wireless communication system, disclosed in the present specification, allow uplink switching to be performed between three or more bands. Even if a specific option associated with uplink switching is configured in a terminal, the status of Tx chains according to whether two-port transmission in each band is permitted can be reported/configured.

【FIG. 5】

```
Configure at least three UL bands related to UL switching          —— S501

Receive parameter indicating UL switching option                   —— S503

Perform second transmission after first transmission               —— S505
(perform second transmission in state capable of supporting first transmission)
```

Description

## TECHNICAL FIELD

The present disclosure relates to a method and apparatus for use in a wireless communication system.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

## DISCLOSURE

## TECHNICAL PROBLEM

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

## TECHNICAL SOLUTION

The present disclosure provides a method and apparatus for transmitting and receiving a signal in a wireless communication system.

In an aspect of the present disclosure, provided herein is a method of transmitting and receiving signals by a user equipment (UE) in a wireless communication system. The method includes: configuring at least three uplink bands related to uplink switching, wherein the at least three uplink bands include a first band, a second band, and a third band; receiving a parameter indicating an option for the uplink switching; and performing second transmission on a carrier of the second band after performing first transmission on a carrier of the first band. The uplink switching is related to the first transmission and the second transmission, and a state of transmission (Tx) chains after the uplink switching is configured based on the option configured by the parameter and whether 2-port transmission is allowed on the second band.

In another aspect of the present disclosure, provided herein is a method of transmitting and receiving signals by a base station (BS) in a wireless communication system. The method includes: configuring at least three uplink bands related to uplink switching for a user equipment, wherein the at least three uplink bands include a first band, a second band, and a third band; transmitting a parameter indicating an option for the uplink switching; and receiving second transmission on a carrier of the second band after receiving first transmission on a carrier of the first band. The uplink switching is related to the first transmission and the second transmission, and a state of Tx chains after the uplink switching is configured based on the option configured by the parameter and whether 2-port transmission is allowed on the second band.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

## ADVANTAGEOUS EFFECTS

According to one embodiment of the present disclosure, when control and data signals are transmitted and received between communication devices, the signals may be transmitted and received more efficiently based on operations different from those in the prior art

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

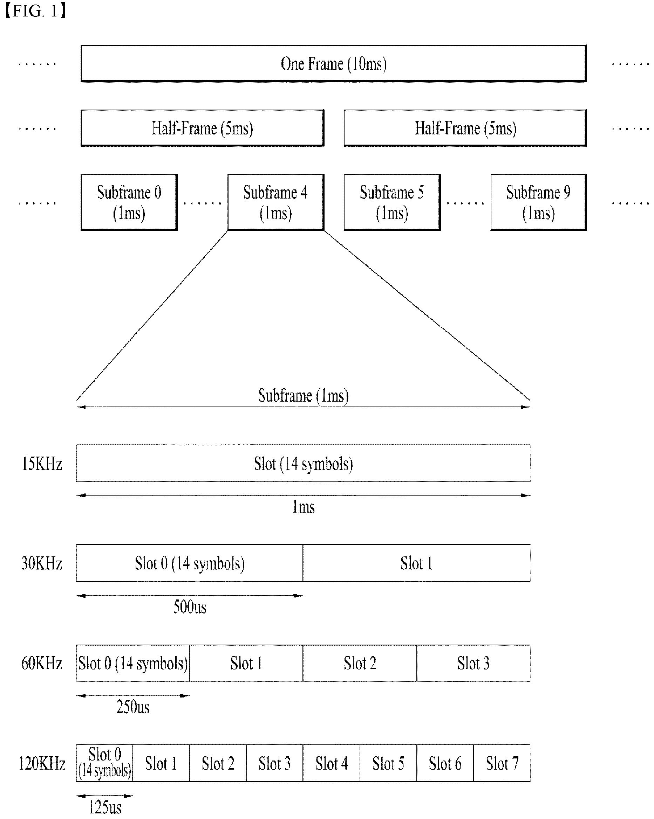

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 1.5KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{fume,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

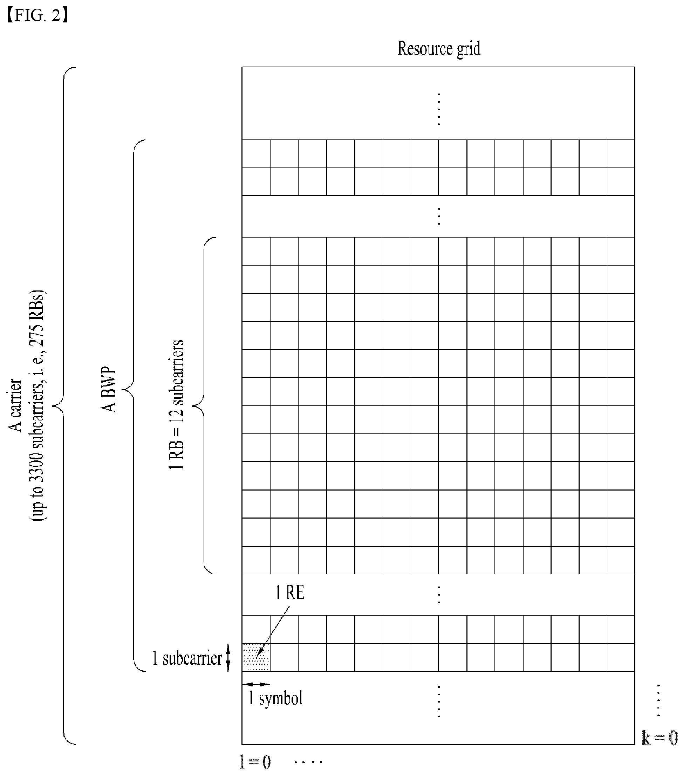

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present based on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

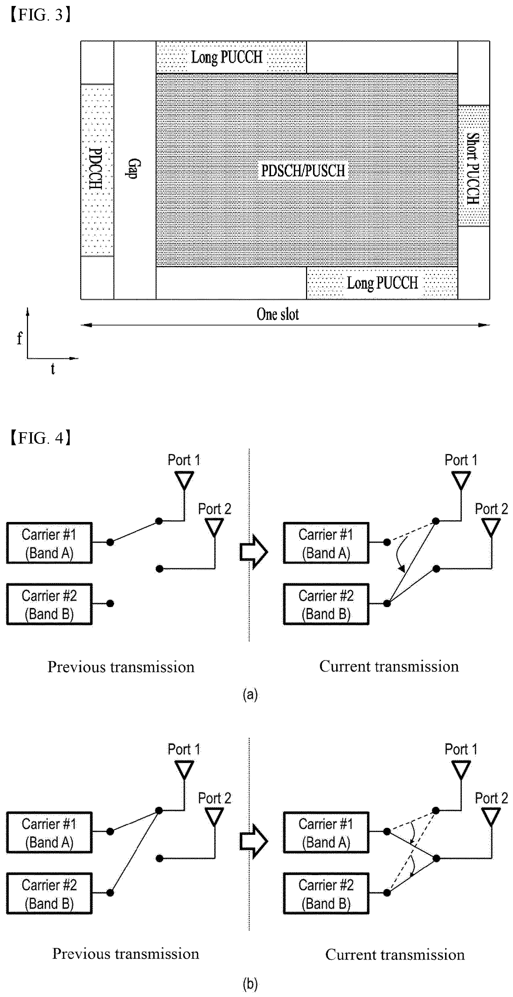

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 4]

| PUCCH format | Length in OFDM symbols $N_{symb}^{PUCCH}$ | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ. CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols(e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. The DFT is applied to encoded UCI bits with no multiplexing between UEs.

**Uplink switching with 3 or 4 uplink bands**

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/indicated to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap $N_{Tx1-Tx2}$. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g. RRC) parameter supplementary Uplink, the switching gap may be present under certain conditions. For example, the following tables are taken from 3GPP TS 38.214 V171.0 and illustrate UTS conditions.

When UL switching is triggered for UL transmission starting at $T_0$, which is after $T_0 - T_{offset}$, the UE is not expected to cancel the UL switching, or to trigger any other new UL switching that occurs before $T_0$ for any other UL transmission scheduled after $T_0 - T_{offset}$, where $T_{offset}$ may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with $u_{UL} = \max(u_{UL,1}, u_{UL,2})$, where $u_{UL,1}$ corresponds to a subcarrier spacing of an active UL BWP of one UL carrier before the switching gap and $u_{UL,2}$ corresponds to the subcarrier spacing of the active UL BWP of another UL carrier after the switching gap.

[Table 5]

**6.1.6.1 Uplink switching for EN-DC**

(continued)

For a UE indicating a capability for uplink switching with *BandCombination-UplinkTxSwitch* for a band combination, and if it is for that band combination configured with a MCG using E-UTRA radio access and with a SCG using NR radio access (EN-DC), if the UE is configured with uplink switching with parameter *uplink TxSwitching*.

- for the UE configured with *switchedUL* by the parameter *uplinkTxSwitchingOption,* when the UE is to transmit in the uplink based on DCI(s) received before $T_0$ - $T_{offset}$ or based on a higher layer configuration(s):

- when the UE is to transmit an NR uplink that takes place after an E-UTRA uplink on another uplink carrier then the UE is not expected to transmit for the duration of $N_{Tx1-Tx2}$ on any of the two carriers.

- when the UE is to transmit an E-UTRA uplink that takes place after an NR uplink on another uplink carrier then the UE is not expected to transmit for the duration of $N_{Tx1-Tx2}$ on any of the two carriers.

- the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped,

- for the UE configured with *uplinkTxSwitchingOption* set to 'dualUL', when the UE is to transmit in the uplink based on DCI(s) received before $T_0$ - $T_{offset}$ or based on a higher layer configuration(s):

- when the UE is to transmit an NR two-port uplink that takes place after an E-UTRA uplink on another uplink carrier then the UE is not expected to transmit for the duration of $N_{Tx1-Tx2}$ on any of the two carriers.

- when the UE is to transmit an E-UTRA uplink that takes place after an NR two-port uplink on another uplink carrier then the UE is not expected to transmit for the duration of $N_{Tx1-Tx2}$ on any of the two carriers.

- the UE is not expected to transmit simultaneously a two- port transmission on the NR uplink and the E-UTRA uplink.

- in all other cases the UE is expected to transmit normally all uplink transmissions without interruptions.

- when the UE is configured with *tdm-PatternConfig* or by *tdm-PatternConfig2*

- for the E-UTRA subframes designated as uplink by the configuration, the UE assumes the operation state in which one-port E-UTRA uplink can be transmitted.

- for the E-UTRA subframes other than the ones designated as uplink by the configuration, the UE assumes the operation state in which two-port NR uplink can be transmitted.

[Table 6]

**6.1.6.2 Uplink switching for carrier aggregation**

For a UE indicating a capability for uplink switching with *BandCombination-UplinkTxSwitch* or *uptinkTxSwitchingPeriod2T2T* for a band combination, and if it is for that band combination configured with uplink carrier aggregation:

- If the UE is configured with uplink switching with parameter *uplinkTxSwitching,* when the UE is to transmit in the uplink based on DCI(s) received before $T_0$ - $T_{offset}$ or based on a higher layer configuration(s):

- When the UE is to transmit a 2-port transmission on one uplink carrier on one band and if the preceding uplink transmission is a 1-port transmission on another uplink carrier on another band. then the UE is not expected to transmit for the duration of $N_{Tx1-Tx2}$ on any of the carriers.

- When the UE is to transmit a 1-port transmission on one uplink carrier on one band and if the preceding uplink transmission is a 2-port transmission on another uplink carrier on another band, then the UE is not expected to transmit for the duration of $N_{Tx1-Tx2}$ on any of the **carriers.**

- For the UE configured with *uplinkTxSwitchingOption* set to 'switchedUL', when the UE is to transmit a 1 -port transmission on one uplink carrier on one band and if the preceding uplink transmission was a 1-port transmission on another uplink carrier on another band, then the UE is not expected to transmit for the duration of $N_{Tx1-Tx2}$ on any of the carriers.

- For the UE configured with *uplinkTxSwitchingOption* set to 'dualUL', when the UE is to transmit a 2-port transmission on one uplink carrier on one band and if the preceding uplink transmission was a 1-port transmission on a carrier on the same band and the UE is under the operation state in which 2-port transmission cannot be supported in the same band, then the UE is not expected to transmit for the duration of $N_{Tx1-Tx2}$ on any of the carriers.

- For the UE configured with *uplinkTxSwitchingOption* set to 'dualUL', when the UE is to transmit a 1-port transmission on one uplink carrier on one band and if the preceding uplink transmission was a 1-port transmission on another uplink carrier on another band and the UE is under the operation state in which 2-port transmission can be supported on the same uplink carrier, then the UE is not expected to transmit for the duration of $N_{Tx1-Tx2}$ on any of the carriers.

(continued)

| |
|---|
| - For the UE configured with *uplinkTxSwitchingOption* set to 'dualUL', if the UE is configured with *OneT* with *uplinkTxSwitching-DualUL-TxState,* when the UE is under the operation state in which 2-port transmission can be supported on one carrier on one band followed by no transmission on any carrier on the same band and 1-port transmission on the other carrier on another band the UE shall consider this as if I-port transmission was transmitted on both uplinks. otherwise the UE shall consider this as if 2-port transmission took place on the transmitting carrier. <br> - *If uplinkTxSwitching-2T-Mode* is configured. when the UE is to transmit a 2-port transmission on one uplink carrier on one band and if the preceding uplink transmission is a 2-port transmission on another uplink carrier on another band, then the UE is not expected to transmit for the duration of $N_{Tx1-Tx2}$ on any of the carriers. <br> - The UE is not expected to be scheduled or configured with uplink transmissions that result in simultaneous transmission on two antenna ports on one uplink carrier on one band, and any transmission on another uplink carrier on another band. <br> - In all other cases the UE is expected to transmit normally all uplink transmissions without interruptions. |

[Table 7]

| |
|---|
| 6.1.6.3 Uplink switching for supplementary uplink <br> For a UE indicating a capability for uplink switching with *BandCombination-UplinkTxSwitch* for a band combination, and if it is for that band combination configured in a serving cell with two uplink carriers with higher layer parameter *supplementaryUplink:* <br>     - If the UE is configured with uplink switching with parameter *uplinkTxSwitching*, <br>         - If the UE is to transmit any uplink channel or signal on a different uplink on a different band from the preceding transmission occasion based on DCI(s) received before $T_0$ - $T_{offset}$ or based on a higher layer configuration(s), then the UE assumes that an uplink switching is triggered in a duration of switching gap $N_{Tx1-Tx2}$, where $T_0$ is the start time of the first symbol of the transmission occasion of the uplink channel or signal and $T_{offset}$ is the preparation procedure time of the transmission occasion of the uplink channel or signal given in clause 5.3, clause 5.4, clause 6.2.1. clause 6.4 and in clause 9 of [6, TS 38.213]. respectively. During the switching gap $N_{Tx1-Tx2}$, the UE is not expected to transmit on any of the two uplinks. <br>     - In all other cases the UE is expected to transmit normally all uplink transmissions without interruptions. |

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.

- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS. The UTS gap (switching gap) and the UTS period (switching period) may be specifically distinguished as follows.

    ■ Switching period: Switching time reported by UE. Basically, this is a band pair unit including two bands, and is reported as one of values of {35 us, 140 us, and 210 us}. For a specific switching case, a single value may be reported as a band combination unit including three or more bands. In this specification, it may also be expressed as a UTS period/time or a switching period.
    ■ Switching gap: Time duration during which UL transmission in all (or some) bands related to a single UL Tx switching event due to this. The switching gap may be determined as a switching period (reported by a UE) for the corresponding Tx switching or determined by using the switching period of each band pair related to the corresponding Tx switching.

For example, for A(1T)+B(1T)->C(2T) switching, in which transmission occurs using 2 Tx chains on a band C while 1 Tx chain is connected to a band A and 1 Tx chain is connected to a band B, if a band combination {A+B, C} is reported by the UE, the switching gap is determined as a reported value. If not reported, the switching gap may be determined as a value derived using the switching period AB (period_AB) for a band pair including the bands A and B and the switching period AC (period_AC) for a band pair including the bands A and C. In this specification, it may also be expressed as a UTS gap/interval or a switching interval.

- A 1 Tx chain may be expressed as 1T, and a 2Tx chain may be expressed as 2T.
- 1-port UL transmission may be expressed as 1p, and 2-port UL transmission may be expressed as 2p.
- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).
- UL transmission may mean any UL channel or UL signal supported by NR, and the like.
- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission".
- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching.

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

Unless otherwise specified, a band pair or band combination mentioned in the present disclosure may refer to any (specific) band combination, or a combination (pair) of two bands belonging to any (specific) band combination, or a combination (pair) of two bands that are unrelated to any (specific) band combination. Therefore, the two bands may belong to different band combinations.

Tables 8 and 9 show, respectively, the state of Tx chains connected for each band (i.e., the number of Tx chains) and the antenna port mapping capable of being used for UL transmission (in all cases) based on the state of the Tx chains when 3 or 4 UL bands (and/or carriers) are configured for UL Tx switching. If one Tx chain is connected to a specific band and/or a carrier within the band, it is represented as '1T', if two Tx chains are connected, it is represented as '2T', and if no Tx chain is connected, it is represented as '0T'. Additionally, if UL transmission scheduled (via DCI) or configured (via higher layer signaling/configuration) uses one antenna port, it is represented as '1P', if the UL transmission uses two antenna ports, it is represented as '2P'; and if there is no scheduling/configuration for UL transmission for the band and/or carrier within the band, it is represented as '0P'. In each table, Band A, Band B, Band C, and (Band D) represent arbitrary 3 (or 4) different bands, rather than specific bands with particular frequencies. Additionally, expressions such as Band A (Carrier 1) do not necessarily mean that Band A has only one Carrier. It may also be applied when the band includes two or more carriers (in an intra-band CA relationship). However, for simplicity of expression, it is written as shown below.

[Table 8]

| | Number of Tx Chains (Band A + Band B + Band C) | Number of antenna ports for UL transmission Band A(Carrier 1)+Band B(Carrier 2)+Band C(Carrier 3) |
|---|---|---|
| Case 1 | 1T+1T+0T | 1P+1P+0P, 1P+0P+0P, 0P+1P+0P |
| Case 2 | 0T+1T+1T | 0P+1P+1P, 0P+1P+0P, 0P+0P+1P |
| Case 3 | 1T+0T+1T | 1P+0P+1P, 1P+0P+0P, 0P+0P+1P |
| Case 4 | 2T+0T+0T | 2P+0P+0P, 1P+0P+0P |
| Case 5 | 0T+2T+0T | 0P+2P+0P, 0P+1P+0P |
| Case 6 | 0T+0T+2T | P+0P+2P, 0P+0P+1P |

[Table 9]

| | Number of Tx Chains (Band A + Band B + Band C + Band D) | Number of antenna ports for UL transmission Band A(Carrier 1)+Band B(Carrier 2)+Band C(Carrier 3)+Band D(Carrier 4) |
|---|---|---|
| Case 1 | 1T+1T+0T+0T | 1P+1P+0P+0P, 1P+0P+0P+0P, 0P+1P+0P+0P |
| Case 2 | 0T+1T+1T+0T | 0P+1P+1P+0P, 0P+1P+0P+0P, 0P+0P+1P+0P |
| Case 3 | 0T+0T+1T+1T | 0P+0P+1P+1P, 0P+0P+1P+0P, 0P+0P+0P+1P |
| Case 4 | 1T+0T+0T+1T | 1P+0P+0P+1P, 1P+0P+0P+0P, 0P+0P+0P+1P |
| Case 5 | 1T+0T+1T+0T | 1P+0P+1P+0P, 1P+0P+0P+0P, 0P+0P+1P+0P |
| Case 6 | 0T+1T+0T+1T | 0P+1P+0P+1P, 0P+1P+0P+0P, 0P+0P+0P+1P |
| Case 7 | 2T+0T+0T+0T | 2P+0P+0P+0P, 1P+0P+0P+0P |
| Case 8 | 0T+2T+0T+0T | 0P+2P+0P+0P, 0P+1P+0P+0P |
| Case 9 | 0T+0T+2T+0T | 0P+0P+2P+0P, 0P+0P+1P+0P |
| Case 10 | 0T+0T+0T+2T | 0P+0P+0P+2P, 0P+0P+0P+1P |

As shown in Tables 8 and 9, when the UL Tx switching operation is configured for 3 or 4 bands/carriers, the UE needs to monitor or manage a larger number of switching cases compared to the operation in 2 bands supported in conventional Rel-17 UL Tx switching. As a result, the complexity of the UE implementation may increase. Therefore, a method of restricting the UL Tx switching operation to allow only specific switching cases based on UE capabilities and/or RRC configuration may be considered.

An RRC parameter uplinkTxSwitchingOption provided to the UE by the BS may indicate which option is configured for dynamic UL Tx switching for inter-band UL CA or (NG)EN-DC. This RRC parameter is configured to swtichedUL when a network configures Option1, and is configured to dualUL when the network configures Option2. When the UE receives the corresponding RRC value configured to "switchedUL", the UE does not expect/perform that 1 Tx chain is to be connected to each of the corresponding two bands, or does not expect/perform concurrent transmission (instruction/configuration) on the corresponding two bands even if 1 Tx chain is connected to each of the two bands. Hereinafter, this is expressed as an Option1 operation configured. For example, the UE configured with switchedUL may not expect concurrent transmission of A(1T) and B(1T) to be instructed/configured, and the BS may not instruct/configure concurrent transmission of A(1T) and B(1T) to the UE. When the UE receives the corresponding RRC value configured to "dualUL", the UE may expect to schedule/configure (or perform) concurrent transmission on the corresponding two bands via 1 Tx chains connected to each of the two bands, and this is expressed as an Option2 operation configured below.

In the present disclosure, the expression of Tx chain or Tx may be substituted with a transmission antenna connector, transmitter, or transmission chain.

In this specification, the symbols '-', '■', '♦', and '•' listed at the frontmost paragraph may indicate vertical/horizontal relationships between descriptions in each paragraph. In detail, it may mean upper categories in the order of '-', '■', '♦', and '•'. For example, the '■' stated after '-' may be an additional explanation for '-'. The '♦' following '■' may be an additional explanation for '■'. The '•' following '♦' may be an additional explanation for '♦'.

In the present disclosure, UL Tx switching may be referred to as Tx switching or UL switching.

**[1] Method for changing switching case in 'switchedUL' mode**

[1-1] According to the conventional standard, the UE configured with UL Tx switching may report one of {switchedUL, dualUL, both} through the UE capability parameter uplinkTxSwitching-OptionSupport. Additionally, the UE may be configured with either 'switchedUL' or 'dualUL' through the RRC parameter uplink TxSwitchingOption. In a band combination (or band pair or cells) where 'dualUL' is configured, concurrent UL transmission is allowed in two different UL bands (or carriers). In a band combination (or band pair or cells) where 'switchedUL' is configured, concurrent UL transmission is not allowed.

[1-2] When 'switchedUL' is configured, all cases shown in Tables 8 or 9 may not be used. For example, in Table 9, Case 1, Case 2, or Case 3 assume that 1 Tx is connected to each of the 2 bands. If 1-port UL transmission is scheduled for each of the 2 bands, the Tx chains may switch to the Tx states corresponding to Case 1, Case 2, or Case 3. However, when the UE is configured with 'switchedUL', such scheduling is not allowed, and Case 1/2/3 may be unnecessary. Therefore, when the UE is configured with 'switchedUL', only Case 4/5/6 may operate, as shown in Table 10.

[Table 10]

| | Number of Tx Chains (Band A + Band B + Band C) | Number of antenna ports for UL transmission Band A(Carrier 1)+Band B(Carrier 2)+Band C(Carrier 3) |
|---|---|---|
| Case 4 | 2T+0T+0T | 2P+0P+0P, 1P+0P+0P |
| Case 5 | 0T+2T+0T | 0P+2P+0P, 0P+1P+0P |
| Case 6 | 0T+0T+2T | P+0P+2P, 0P+0P+1P |

As another example, when the UE is configured with 'switchedUL', the UE may only operate with Case 7/8/9/10, as shown in Table 11.

[Table 11]

| | Number of Tx Chains (Band A + Band B + Band C + Band D) | Number of antenna ports for UL transmission Band A(Carrier 1)+Band B(Carrier 2)+Band C(Carrier 3)+Band D(Carrier 4) |
|---|---|---|
| Case 7 | 2T+0T+0T+0T | 2P+0P+0P+0P, 1P+0P+0P+0P |
| Case 8 | 0T+2T+0T+0T | 0P+2P+0P+0P, 0P+1P+0P+0P |
| Case 9 | 0T+0T+2T+0T | 0P+0P+2P+0P, 0P+0P+1P+0P |
| Case 10 | 0T+0T+0T+2T | 0P+0P+0P+2P, 0P+0P+0P+1P |

[1-3] As shown in the tables in [1-2], only a case where 2 Tx are connected to a specific band (e.g., 2T+0T+0T in Table 8) is defined/configured, while a case where 1 Tx is connected to each of two specific bands (e.g., 1T+1T+0T in Table 8) may not be defined/configured. If 1-port UL transmission occurs on a band where no Tx is currently connected, Tx switching is triggered in the current band pair (i.e., the band pair including the band where the current Tx is connected and the band where the 1-port transmission occurs). In the two bands, UL transmission is not performed during a Tx switching gap. For example, when the current Tx chain corresponds to Case 4 in Table 10, if 1-port UL transmission occurs on Band B, Tx switching is triggered in the band pair {A, B}. Additionally, a switching period reported for the band pair {A, B} may be applied as the switching gap for UL Tx switching. In this example, if 1-port UL transmissions occur alternately and consecutively on Band A and Band B, Tx switching may frequently occur in the band pair {A, B}. In other words, the Tx state of the UE may frequently change between Case 4 and Case 5.

[1-4] For a band (band pair or band combination) where 'switchedUL' is configured, it is assumed that 1 Tx is connected to each of two specific bands (e.g., 1T+1T+0T in Table 8). Therefore, even in the case of 'switchedUL', one or more of Case 1/2/3 in Table 8 may be defined/configured. Additionally, even in the case of 'switchedUL', one or more of Case 1/2/3/4/5/6 in Table 9 may be defined/configured. For example, the UE may operate using Case 2/4/5/6 as shown in Table 12 below. Alternatively, the UE may operate using all of Case 1/2/3/4/5/6 as shown in Table 8.

[Table 12]

|  |  | Number of Tx Chains (Band A + Band B + Band C) | Number of antenna ports for UL transmission Band A(Carrier 1)+Band B(Carrier 2)+Band C(Carrier 3) |
|---|---|---|---|
| Case 2 | | 0T+1T+1T | 0P+1P+1P, 0P+1P+0P, 0P+0P+1P |
| Case 4 | | 2T+0T+0T | 2P+0P+0P, 1P+0P+0P |
| Case 5 | | 0T+2T+0T | P+2P+0P, 0P+1P+0P |
| Case 6 | | 0T+0T+2T | P+0P+2P, 0P+0P+1P |

If Case 2 is introduced in 'switchedUL', even when 1-port UL transmissions occur alternately between Band B and Band C, the issue of frequent UL Tx switching may be avoided.

In the conventional communication system (3GPP TS 38.214), it is specified that when the UE is configured with 'switchedUL' and the preceding UL transmission and the next UL transmission occur on different bands (or carriers), a switching gap occurs as shown in Table 13. However, when Tx states such as 1T+1T are allowed in 'switchedUL' (e.g., when Case 2 is used), such conditions may no longer be valid. Due to the above allowance, a switching gap occurs only when the UE is configured with 'switchedUL' and 1-port UL transmission occurs on a band where the current Tx chain is not connected. In this case, the UE may change (the condition for 'switchedUL') such that no UL transmission is performed (on bands including the corresponding band).

[Table 13]

For the UE configured with uplinkTxSwitchingOption set to 'switchedUL', when the UE is to transmit a 1-port transmission on one uplink carrier on one band and if the preceding uplink transmission was a 1-port transmission on another uplink carrier on another band, then the UE is not expected to transmit for the duration of $N_{Tx1-Tx2}$ on any of the carriers.

In this case, a problem where the Tx state is not uniquely determined after Tx switching may arise. For example, when the state of Tx chains is Case 4, if 1-port UL transmission is scheduled on Band C, Tx switching occurs. In this case, it needs to be determined whether the Tx chains will switch to Case 2 or Case 6. To resolve this, the proposed methods in [1-5] may be applied.

[1-5] When a Tx state including 1T+1T of specific band pair(s) (e.g., Case 2 in [Table 1-3]) is defined/configured to the UE configured with 'switchedUL', at least one of the following methods may be used to uniquely determine the Tx state after Tx switching. These methods may also be applied to determine the Tx state after Tx switching in other proposed methods described later.

- Method 1: When there is 1 or 2 Tx chains in a specific band pair, the Tx switching operation method may be defined based on the band where 1-port UL transmission occurs.

  ▪ When all of the Tx chains (e.g., 2 Tx chains) of the UE are connected to one of the bands in a specific band pair, if 1-port UL transmission occurs on the other band in the corresponding band pair, Tx switching may be triggered such that one Tx chain is connected to (or positioned on) each of the two bands in the band pair. However, in cases other than this (where 1-port UL transmission occurs), Tx switching may be triggered such that all of the 2 Tx chains are connected to (or positioned on) one band.

- ◆ For example, in Table 12, if 1-port UL transmission occurs on Band C (or Band B) while in Case 5 (or Case 6), the Tx chains may switch to Case 2. However, if 1-port UL transmission occurs on Band A, the Tx chains may switch to Case 4.
- ◆ As another example, in Table 12, if 1-port UL transmission occurs on Band B (or Band C) while in Case 4, the Tx chains may switch to Case 5 (or Case 6).

- ■ When Tx chains are connected to each of the two bands in a specific band pair, if 1-port UL transmission occurs on one of the bands in the corresponding band pair, Tx switching is not triggered. However, in cases other than this (where 1-port UL transmission occurs), Tx switching may be triggered such that all of the 2 Tx chains are connected to (or positioned on) one band.

- ◆ For example, in Table 12, if 1-port UL transmission occurs on Band B (or Band C) while in Case 2, Tx switching is not triggered. However, if 1-port UL transmission occurs on Band A while in Case 2, the Tx chains may switch to Case 4.

- ■ Alternatively, when a 1T+1T state is defined/configured for a specific band pair, if 1-port UL transmission occurs on one of the bands in the band pair, Tx switching may be performed such that one Tx chain is positioned on each of the two bands in the band pair,

- Method 2: The RRC parameter used for 'dualUL' may also be used for 'switchedUL'.

- ■ That is, the Rel-17 RRC parameter uplinkTxSwitching-DualUL-TxState may also be used for 'switchedUL'. When the RRC parameter is set to 'twoT', all of the 2 Tx chains may switch to a band where 1-port UL transmission occurs (regardless of the current Tx chain state). When the RRC parameter is set to 'oneT', one Tx chain may switch to each of the two bands in the band pair where the 1T+1T state is defined/configured.
- ■ Even when 'oneT' is configured, if the Tx state after Tx switching is not unique, a separate RRC parameter may be configured to select one state.

- Method 3: A new RRC parameter may be introduced to determine the Tx state after Tx switching.

- ■ Whether the Tx chains switch such that 2 Tx are positioned on the band where 1-port UL transmission occurs or such that 1 Tx is positioned on the band where 1-port UL transmission occurs and 1 Tx is positioned on another specific band may be configured via RRC (in this case, the specific band may also be configured).

[1-6] When 2-port UL transmission is configured such that it is allowed only on some of the bands (or band pairs) where 'switchedUL' is configured, a determination needs to be made whether to consider only the 2T state, as shown in Table 10 and Table 11, or to consider all the cases in Table 8 and Table 9. The operation method may vary based on the number of bands where 2-port transmission is allowed among the 3 or 4 bands.

[1-7] If 2-port UL transmission is allowed on all bands configured to the UE (or on all bands where 'switchedUL' is configured), the Tx switching operation may be performed by defining/setting only the 2T state, as shown in Table 10 or Table 11. Alternatively, if the 1T+1T state is defined/configured for some band pairs, as described in [1-4] and [1-5], the Tx switching operation may be performed according to the method for determining the Tx switching state. In this case, the bands where 2-port UL transmission is allowed may be determined on a per-band basis (or per-band pair basis) based on separate (or the same) UE capabilities and/or RRC.

[1-8] If 2-port UL transmission is not allowed on all the bands configured to the UE (or on all the bands where 'switchedUL' is configured), the Tx switching operation may be performed according to one of the methods below. Alternatively, one of the methods may be determined through RRC configurations (and/or reported via UE capabilities). In this case, the bands where 2-port UL transmission is not allowed may be determined on a per-band basis (or per-band pair basis) based on separate (or the same) UE capabilities and/or RRC.

- Method 1: It may be defined/configured that the 1T-1T state is used, and the 2T state is not used.

- ■ Regarding UL Tx switching involving three bands, one or more of Case 1/2/3 in Table 9 may be defined/configured, and Case 4/5/6 may not be used. In this case, which of Case 1/2/3 will be used and/or how many cases will be used may be determined through RRC configurations (and/or reported via UE capabilities). For example, a band pair where the 1T-1T state is defined/configured may be reported or configured. For instance, when all of Case 1/2/3 are used, it is as shown in Table 14. Alternatively, the UE may be defined/configured to use only the minimum number of cases for the 1T-1T states. For example, the UE may be defined/configured to use Case 1/2, Case 2/3, or Case 1/3.

[Table 14]

| | Number of Tx Chains (Band A + Band B + Band C) | Number of antenna ports for UL transmission Band A(Carrier 1)+Band B(Carrier 2)+Band C(Carrier 3) |
|---|---|---|
| Case 1 | 1T+1T+0T | 1P+0P+0P, 0P+1P+0P |
| Case 2 | 0T+1T+1T | 0P+1P+0P, 0P+0P+1P |
| Case 3 | 1T+0T+1T | 1P+0P+0P, 0P+0P+1P |

■ Regarding UL Tx switching involving four bands, one or more of Case 1/2/3/4/5/6 in Table 9 may be defined/configured, and Case 7/8/9/10 may not be used. In this case, which of Cases 1 to 6 will be used and/or how many cases will be used may be determined through RRC configurations (and/or reported via UE capabilities). For example, a band pair where the 1T-1T state is defined/configured may be reported or configured. For instance, when all of Cases 1 to 6 are used, it is as shown in Table 15. Alternatively, the UE may be defined/configured to use only the minimum number of cases for the 1T-1T states. For example, the UE may be defined/configured to use Case 1/3, Case 2/4, or Case 5/6.

[Table 15]

| | Number of Tx Chains (Band A + Band B + Band C + Band D) | Number of antenna ports for UL transmission Band A(Carrier 1)+Band B(Carrier 2)+Band C(Carrier 3)+Band D(Carrier 4) |
|---|---|---|
| Case 1 | 1T+1T+0T+0T | 1P+0P+0P+0P, 0P+1P+0P+0P |
| Case 2 | 0T+1T+1T+0T | 0P+1P+0P+0P, 0P+0P+1P+0P |
| Case 3 | 0T+0T+1T+1T | 0P+0P+1P+0P, 0P+0P+0P+1P |
| Case 4 | 1T+0T+0T+1T | 1P+0P+0P+0P, 0P+0P+0P+1P |
| Case 5 | 1T+0T+1T+0T | 1P+0P+0P+0P, 0P+0P+1P+0P |
| Case 6 | 0T+1T+0T+1T | 0P+1P+0P+0P, 0P+0P+0P+1P |

- Method 2: (Some) 2T states and (some) 1T-1T states may be defined/configured for use. For example,

■ Regarding UL Tx switching involving three bands, some (at least one) of Case 1/2/3 in Table 8 may be defined/configured, and some (at least one) of Case 4/5/6 may also be defined/configured. In this case, which of Case 1/2/3 will be used and/or how many cases will be used may be determined through RRC configurations (and/or reported via UE capabilities). For example, a band pair where the 1T-1T state is defined/configured may be reported or configured. For example, the configuration shown in Table 16 may be allowed. Alternatively, the UE may be defined/configured to use only the minimum number of cases for the Tx states. For example, the UE may be defined/configured to use Case 1/6, Case 2/4, or Case 3/5.

[Table 16]

| | Number of Tx Chains (Band A + Band B + Band C) | Number of antenna ports for UL transmission Band A(Carrier 1)+Band B(Carrier 2)+Band C(Carrier 3) |
|---|---|---|
| Case 1 | 1T+1T+0T | 1P+0P+0P, 0P+1P+0P |
| Case 6 | 0T+0T+2T | 0P+0P+1P |

■ Regarding UL Tx switching involving four bands, some (at least one) of Cases 1 to 6 in Table 9 may be defined/configured, and some (at least one) of Cases 7 to 10 may also be defined/configured. In this case, which of Cases 1 to 6 will be used and/or how many cases will be used may be determined through RRC configurations (and/or reported via UE capabilities). For example, a band pair where the 1T-1T state is defined/configured may be reported or configured. For example, a band pair where the 1T-1T state is defined/configured may be reported or configured. For example, if the 1T+1T state is defined/configured for X bands, and the 2T state is defined/configured for the remaining bands not included in X. In this case, the configuration shown in Table 17 may be allowed. Alternatively, the UE may be defined/configured to use only the minimum number of cases for the Tx states. For example, the UE may be defined/configured to use Case 1/2/10, Case 1/5/10, or Case 2/5/10.

[Table 17]

|  | Number of Tx Chains (Band A + Band B + Band C + Band D) | Number of antenna ports for UL transmission Band A(Carrier 1)+Band B(Carrier 2)+Band C(Carrier 3)+Band D(Carrier 4) |
|---|---|---|
| Case 1 | 1T+1T+0T+0T | 1P+0P+0P+0P, 0P+1P+0P+0P |
| Case 2 | 0T+1T+1T+0T | 0P+1P+0P+0P, 0P+0P+1P+0P |
| Case 5 | 1T+0T+1T+0T | 1P+0P+0P+0P, 0P+0P+1P+0P |
| Case 10 | 0T+0T+0T+2T | 0P+0P+0P+1P |

[1-9] If 2-port UL transmission is not allowed on some of the bands configured to the UE (or on bands where 'switchedUL' is configured), the UE and BS may operate according to one of the following methods. Alternatively, one of the methods may be determined through RRC configurations (and/or reported via UE capabilities). In this case, the bands where 2-port UL transmission is allowed (or not allowed) may be determined on a per-band basis (or per-band pair basis) based on separate (or the same) UE capabilities and/or RRC.
- Method 1: For bands where 2-port UL transmission is not allowed, the 2T state may not be defined/configured, and only the 1T-1T state may be used for band pair(s) that include those band(s) (i.e., all, some, or a specific one) (for the remaining band pairs, the 1T-1T state is not used).
  ▪ For example, when the UE is configured to operate UL Tx switching across three bands, if 2-port UL transmission is not allowed on Band A, Case 1 and Case 3 may be defined/configured without Case 4 in Table 8. The UE may define/configure the Tx switching operation with the cases shown in Table 18. Alternatively, the UE may be defined/configured to operate with three cases: one of Case 1 and 3 along with Case 5/6, that is, Case 1/5/6 or Case 3/5/6 only.

[Table 18]

|  | Number of Tx Chains (Band A + Band B + Band C) | Number of antenna ports for UL transmission Band A(Carrier 1)+Band B(Carrier 2)+Band C(Carrier 3) |
|---|---|---|
| Case 1 | 1T+1T+0T | 1P+0P+0P, 0P+1P+0P |
| Case 3 | 1T+0T+1T | 1P+0P+0P, 0P+0P+1P |
| Case 5 | 0T+2T+0T | 0P+2P+0P, 0P+1P+0P |
| Case 6 | 0T+0T+2T | 0P+0P+2P, 0P+0P+1P |

  ▪ As another example, when the UE is configured to operate UL Tx switching across four bands, if 2-port UL transmission is not allowed on Band A and Band, Case 1/2/4/5/6 may be defined/configured without Case 7 and Case 8 in Table 9. The UE may define/configure the Tx switching operation with the cases shown in Table 19.

[Table 19]

|  | Number of Tx Chains (Band A + Band B + Band C + Band D) | Number of antenna ports for UL transmission Band A(Carrier 1)+Band B(Carrier 2)+Band C(Carrier 3)+Band D(Carrier 4) |
|---|---|---|
| Case 1 | 1T+1T+0T+0T | 1P+0P+0P+0P, 0P+1P+0P+0P |
| Case 2 | 0T+1T+1T+0T | 0P+1P+0P+0P,0P+0P+1P+0P |
| Case 4 | 1T+0T+0T+1T | 1P+0P+0P+0P, 0P+0P+0P+1P |
| Case 5 | 1T+0T+1T+0T | 1P+0P+0P+0P, 0P+0P+1P+0P |
| Case 6 | 0T+1T+0T+1T | 0P+1P+0P+0P, 0P+0P+0P+1P |
| Case 9 | 0T+0T+2T+0T | 0P+0P+2P+0P, 0P+0P+1P+0P |
| Case 10 | 0T+0T+0T+2T | 0P+0P+0P+2P, 0P+0P+0P+1P |

- Method 2: For bands where 2-port UL transmission is not allowed, the 2T state is not defined/configured, and the 1T-1T state may be defined/configured to be used only for band pairs consisting of bands where 2-port UL transmission is not allowed (the 1T-1T state is not used for the remaining band pairs).

■ For example, when the UE is configured to operate UL Tx switching across three bands, if 2-port UL transmission is not allowed on Band A and Band B, Case 1 may be defined/configured without Case 4/5 in Table. The UE may define/configure the Tx switching operation with the cases shown in Table 20.

[Table 20]

| | Number of Tx Chains (Band A + Band B + Band C) | Number of antenna ports for UL transmission Band A(Carrier 1)+Band B(Carrier 2)+Band C(Carrier 3) |
|---|---|---|
| Case 1 | 1T+1T+0T | 1P+0P+0P, 0P+1P+0P |
| Case 6 | 0T+0T+2T | 0P+0P+2P, 0P+0P+1P |

■ For example, when the UE is configured to operate UL Tx switching across four bands, if 2-port UL transmission is not allowed on Band C and Band D, Case 3 may be defined/configured without Case 9/10 in Table 9. The UE may define/configure the Tx switching operation with the cases shown in Table 21.

[Table 21]

| | Number of Tx Chains (Band A + Band B + Band C + Band D) | Number of antenna ports for UL transmission Band A(Carrier 1)+Band B(Carrier 2)+Band C(Carrier 3)+Band D(Carrier 4) |
|---|---|---|
| Case 3 | 0T+0T+1T+1T | 0P+0P+1P+0P, 0P+0P+0P+1P |
| Case 7 | 2T+0T+0T+0T | 2P+0P+0P+0P, 1P+0P+0P+0P |
| Case 8 | 0T+2T+0T+0T | 0P+2P+0P+0P, 0P+1P+0P+0P |

- Method 3: The 2T state for bands where 2-port UL transmission is not allowed is maintained (i.e., defined/configured), and the 1T-1T state may be defined/configured to be used only for band pairs consisting of bands where 2-port UL transmission is not allowed (and the 1T-1T state is not used for the remaining band pairs). If the Tx state after Tx switching is ambiguous, the method in [1-5] (e.g., the method of configuring one of the 2T state and the 1T-1T state to be switched based on the parameter {oneT, twoT} via RRC) may be applied.

■ For example, when the UE is configured to operate UL Tx switching across three bands, if 2-port UL transmission is not allowed on Band A and Band B, Case 1 may be (additionally) defined/configured in Table 8 (while maintaining the 2T state corresponding to Case 4/5/6). The UE may define/configure the Tx switching operation with the cases shown in Table 22. For example, if 1-port transmission is indicated/configured on Band A (while the Tx chain state is Case 5 or Case 6), whether the Tx chains switch to Case 1 or Case 4 may be configured based on the RRC parameter value of {oneT, twoT}.

[Table 22]

| | Number of Tx Chains (Band A + Band B + Band C) | Number of antenna ports for UL transmission Band A(Carrier 1)+Band B(Carrier 2)+Band C(Carrier 3) |
|---|---|---|
| Case 1 | 1T+1T+0T | 1P+0P+0P, 0P+1P+0P |
| Case 4 | 2T+0T+0T | 1P+0P+0P |
| Case 5 | 0T+2T+0T | 0P+1P+0P |
| Case 6 | 0T+0T+2T | 0P+0P+2P, 0P+0P+1P |

■ For example, when the UE is configured to operate UL Tx switching across four bands, if 2-port UL transmission is not allowed on Band C and Band D, Case 3 may be (additionally) defined/configured in Table 9 (while maintaining the 2T state corresponding to Case 7/8/9/10). The UE may define/configure the Tx switching operation with the cases shown in Table 23. For example, if 1-port transmission is indicated/configured on Band D (while the Tx chain state is Case 7, 8, or 9), whether the Tx chains switch to Case 3 or Case 10 may be configured based on the RRC parameter value of {oneT, twoT}.

[Table 23]

|  | Number of Tx Chains (Band A + Band B + Band C + Band D) | Number of antenna ports for UL transmission Band A(Carrier 1)+Band B(Carrier 2)+Band C(Carrier 3)+Band D(Carrier 4) |
|---|---|---|
| Case 3 | 0T+0T+1T+1T | 0P+0P+1P+0P, 0P+0P+0P+1P |
| Case 7 | 2T+0T+0T+0T | 2P+0P+0P+0P, 1P+0P+0P+0P |
| Case 8 | 0T+2T+0T+0T | 0P+2P+0P+0P,0P+1P+0P+0P |
| Case 9 | 0T+0T+2T+0T | 0P+0P+1P+0P |
| Case 10 | 0T+0T+0T+2T | 0P+0P+0P+1P |

[1-10] In the proposed methods mentioned above, the UE capability and/or gNB configuration reported regarding whether 2-port UL transmission is allowed or not for some bands (or bands where 'switchedUL' is configured) may be on a per-band basis or per-band pair basis. If the UE capability and/or gNB configuration is on a per-band pair basis, and Tx switching operates across three bands, 2-port UL transmission may be defined/configured to be allowed on at least one band. Additionally, if Tx switching operates across four bands, 2-port UL transmission may be defined/configured to be allowed on at least two bands.

[1-11] Regarding the proposed methods in [1-7] to [1-10], if predefined specific Tx switching cases (or cases for bands where 2-port UL transmission is not allowed) occurs, the 1T+1T state may be defined/configured according to the corresponding method (described above), and the Tx switching of 'switchedUL' may operate. For other Tx switching cases (or cases for bands where 2-port UL transmission is not allowed), only the 2T state may be defined/configured without the 1T+1T state, and the Tx switching of 'switchedUL' may operate.

**[2] Method for changing switching case in 'dualUL' mode**

[2-1] The method for determining the switching case for 'switchedUL' proposed in [1] may be similarly applied to bands (or band pairs) where 'dualUL' is configured. For example, if 2-port UL transmission is allowed on all three (or four) bands, similar to [1-7], only the 2T state may be defined/configured for each band, and the 1T+1T state may not be configured. Alternatively, the 2T state may be defined/configured for some bands, and the 1T+1T state may be defined/configured for other (or the same) bands, to operate Tx switching. Additionally, as described in [1-7] to [1-11], when 2-port UL transmission is allowed or not allowed on some (or all) bands: Tx switching may operate as follows: the 2T state may be defined/configured for each band, and the 1T+1T state may not be configured; the 1T+1T state may be defined/configured for all band pairs, and the 2T state may not be configured; or the 2T state may be defined/configured for some bands, and the 1T+1T state may be defined/configured for other (or the same) bands. For example, if 2-port UL transmission is not allowed on a specific band belonging to a band pair (or band combination) where 'dualUL' is configured, Tx switching may operate in the following state: the 2T state is not defined/configured for the band, while for the remaining bands and all band pairs, both the 2T state and the 1T+1T state is defined/configured.

[2-2] The method for determining whether 2-port UL transmission is allowed or not on a per-band pair basis through UE capability reporting and/or RRC signaling, as described in [1], may be equally applied to 'dualUL'.

[2-3] For bands (or band pairs) where 'switchedUL' is configured, the method of using the 1T-1T state instead of the 2T state, based on whether 2-port UL transmission is allowed or not may be similarly applied to bands (or band pairs) where 'dualUL' is configured, based on whether concurrent UL transmission is allowed or not. That is, when concurrent UL transmission is not allowed on some band pairs of the UE configured with 'dualUL' (or on bands or band pairs configured to the UE), the 1T+1T state, where one Tx chain is positioned on each band of the band pair, may not be defined/configured in Table 8 or Table 9.

[2-4] The proposed methods for 'switchedUL' and/or 'dualUL' in [1] and [2] may be applied when the UE capability and/or RRC configuration for 'switchedUL' and 'dualUL' is made on a per-band pair basis or on a per-band combination basis.

[2-5] When 'switchedUL' and 'dualUL' are mixed across bands (or band pairs or band combinations) configured to the UE, different Tx switching methods among the proposed methods above may be applied separately by distinguishing between the bands (or band pairs) where switchedUL is set and the bands (or band pairs) where 'dualUL' is configured. For example, if among four bands, 'switchedUL' is configured for a band pair of {A, B}, and 'dualUL' is configured for the other band pairs, based on whether 2-port UL transmission is allowed on Band A or Band B, the 2T state and/or 1T+1T state for Tx switching may be defined/configured according to the method proposed in [1]. For the other band pairs, all switching cases in Table 8 or Table 9 may be defined/configured, and the UE may be configured to operate Tx switching.

**[3] Methods for configuring switchedUL and dualUL**

[3-1] For a specific band combination (or for a set of bands (or cells) configured for CA or UL Tx switching), the UE may report through the UE capability whether all the band pairs within the specific band combination are (uniformly) configured to either switchedUL or dualUL, or whether all the band pairs are configured independently for each band pair (this case will be referred to as 'mixed') (in this case, a (corresponding) RRC configuration may be additionally defined/configured).

- For example, the UE may report through the UE capability {'mixed allowed'} or {'mixed allowed', 'mixed not allowed', 'both'}, and based on this, whether the mixed situation of 'switchedUL' and 'dualUL' is allowed for the UE (or for a specific band combination) may be configured by RRC.

[3-2] According to recent RAN1 standardization meetings, in the Rel-18 UL Tx switching operation, 'switchedUL' and 'dualUL' are likely to be defined according to one of the methods in Table 24.

[Table 24]

| Agreement (at RAN1#110bis-e) |
|---|
| Ask RAN2 to consider following alternatives for UE capability reporting about the supported UL Tx switching options<br>Alt.1: report {switchedUL, dualUL, both} for each band pair in the band combination<br>Alt.2: report {switchedUL, dualUL, both} for the band combination and report supported band pair for concurrent transmission for the band combination<br>Note : If there is no report on the supported band pair(s) for concurrent transmission while the UE reports "dualUL" or "both" for the band combination, gNB may assume that the UE supports concurrent transmission on all the band pairs within the band combination<br>Alt.3: report {dualUL} for each band pair in the band combination<br>Note: Within the band combination, the UE shall be capable of being operated in switched UL mode for all band pairs |
| Agreement (at RAN1#110bis-e) |
| Ask RAN2 to consider following alternatives and specify gNB configuration<br>Alt.1: configure {switchedUL, dualUL} for all serving cells (i.e., for the band combination)<br>Alt.2: configure {switchedUL, dualUL} for combination(s) of serving cells (i.e., for each band pair in the band combination)<br>Alt.3: configure {switchedUL, dualUL} for all serving cells (i.e., for the band combination), and configure combination(s) of serving cells (i.e., as supported serving cell pair(s) for each band pair in the band combination) for concurrent transmission |

The UE capability report and gNB configuration may operate as follows (for each combination of alternatives).

- Used abbreviations: S (switchedUL), D (dualUL), B (both), BC (band combination), BP (band pair), per-BP report (UE capability at the band pair level), per-BC report (UE capability at the band combination level), per-BP config (RRC configuration at the band pair level), and per-BC config (RRC configuration at the band combination level)

[Table 25]

| | | gNB configuration | | |
| --- | --- | --- | --- | --- |
| | | **Alt 1**<br>Per-BC config for S/D | **Alt 2**<br>Per-BC config for S/D | **Alt 3**<br>Per-BC config for S/D Per-BP config for concurrent transmission |
| **UE report** | **Alt 1**<br>Per-BP report for S/D/B | - Select and configure one of reported values | - Configure reported value as it is | - If S/D are mixed in report, configure per-BC as S (or D), and only configure concurrent transmission for BP reported as D<br>- If only S is reported, configure no concurrent transmission<br>- If only D is reported, configure concurrent transmission for all BPs |
| | **Alt 2**<br>Per-BC report for S/D/B Concurrent transmission per-BP report (However, if D/B is reported and there is no concurrent transmission per-BP report, concurrent transmission in all BPs is possible) | - Configure reported value as it is<br>- If concurrent transmission report is present and S/D are mixed in report, select and configure one of S/D | - Consider BP reported as concurrent transmission and configure per-BC report values for each BP | - Configure reported value as it is<br><br>- Report and configure concurrent transmission separately on per-BP basis |
| | **Alt 3**<br><br>Per-BP report for D (Operate other BPs in switchedUL mode) | - If there is no D report, configure as S<br>- If D is reported for all BPs, configure as D.<br>- If D is reported for only some BPs, since S/D are mixed, select and configure one of S/D | - Configure only BPs reported as D as D, and configure other BPs as S | - If there are BPs reported as D, configure per-BC as D (or S), and configure concurrent transmission only for BPs reported as D<br><br>- If there is no D report, configure as S |

[3-3] When the 'mixed' situation is allowed for the UE configured with UL Tx switching (through the UE capability in [3-1]), the following operations may be defined/configured according to the different gNB configuration methods in [3-2].

(1) When the gNB configures 'switchedUL' / 'dualUL' on a per-BC basis

- If mixed is allowed,

    ▪ If the per-BP report for all bands only includes S or D, RRC may be configured directly from the per-BP report of the UE without a separate per-BC config from the gNB. On the other hand, if the per-BP report of the UE includes at least one B, the per-BC config of the gNB may determine whether B is set to S or D (alternatively, in this case, it may be predetermined whether B is set to S or D (one of the two)).
    ▪ Alternatively,

        ◆ If the UE reports S, D, or B through the per-BP report,

        • Even if the per-BC config is S, the UE may expect concurrent transmission scheduling on BPs reported as D. Even if the per-BC config is D, the UE may not expect concurrent transmission scheduling on BPs reported as S.

- Alternatively, even if the per-BC config is S, the UE may expect concurrent transmission scheduling on BPs reported as D. Even if the per-BC config is D, the UE may not expect concurrent transmission scheduling on BPs reported as S.

◆ If the UE reports S, D, or B through the per-BC report,

- When S is reported, the gNB config is also expected to be S. However, even if S is configured, the UE may expect concurrent transmission scheduling on BPs reported as D.
- In this case, if the presence of concurrent transmission is reported (separately) on a per-BP basis, the per-BP report may be interpreted as overwriting the per-BC report (i.e., the per-BP report is applied regardless of the per-BC report) or adding the per-BC report (i.e., it is reported that the per-BC report and per-BP report are available when the per-BC report and per-BP report differ).

- If mixed is not allowed,

  ▪ If the per-BP report of the UE includes at least one S (or D) (and the rest are B), all bands may be set to S (or D) without a separate per-BC config from the gNB. On the other hand, if the per-BP report of the UE includes only B, the per-BC config of the gNB may determine whether all bands are set to S or D (alternatively, in this case, it may be predetermined whether B is set to S or D (one of the two)).
  ▪ Alternatively,

    ◆ If the UE reports S, D, or B through the per-BP report,

    - One of the per-BP report values is selected and set to the per-BC config (e.g., if there is at least one S in the per-BP report, the per-BC config is set as S).
    - Alternatively, if there is a "per-BP report for D" in at least one BP, the gNB set the per-BC config as D. Otherwise, the gNB may set the per-BC config as S. If the gNB config is S (or D), all BPs within BC are assumed to be S (or D).

    ◆ If the UE reports S, D, or B through the per-BC report,

    - If the gNB config is S, the UE assumes S for all BPs. If the gNB config is D, the UE assumes D for all BPs.
    - In this case, if the presence of concurrent transmission is reported (separately) on a per-BP basis, the per-BP report may be interpreted as overwriting the per-BC report (i.e., the per-BP report is applied regardless of the per-BC report) or adding the per-BC report (i.e., it is reported that the per-BC report and per-BP report are available when the per-BC report and per-BP report differ).

(2) When the gNB configures 'switchedUL' / 'dualUL' on a per-BP basis,

- If mixed is allowed,

  ▪ If the per-BP report for all bands only includes S or D, the per-BP report of the UE may be configured as it is, without a separate per-BP config from the gNB. On the other hand, if the per-BP report of the UE includes at least one B, the per-BP config of the gNB may determine whether B is set to S or D (alternatively, in this case, it may be predetermined whether B is set to S or D (one of the two)).
  ▪ Alternatively,

    ◆ If the UE reports S, D, or B through the per-BP report,

    - The values configured for each band pair may be applied.
    - Alternatively, based on the gNB config, S or D may be assumed for each BP.

    ◆ If the UE reports S, D, or B through the per-BC report,

    - Based on the gNB config, S or D may be assumed for each BP.
    - In this case, if the presence of concurrent transmission is reported (separately) on a per-BP basis, the per-BP report may be interpreted as overwriting the per-BC report (i.e., the per-BP report is applied regardless of the per-BC report) or adding the per-BC report (i.e., it is reported that the per-BC report and per-BP report are available when the per-BC report and per-BP report differ).

- If mixed is not allowed,

  ▪ If the per-BP report of the UE includes at least one S (or D) (and the rest are B), all bands may be set to S (or D) without a separate per-BP config from the gNB. On the other hand, if the per-BP report of the UE includes only B, the per-BP config of the gNB may determine whether all bands are set to S or D (alternatively, in this case, it may be predetermined whether B is set to S or D (one of the two)).
  ▪ Alternatively,

    ♦ If the UE reports S, D, or B through the per-BP report,

      • One of S or D reported by the UE may be determined according to RRC or predefined rules. If S (or D) is assumed to be selected, for BPs where the per-BP config is not S (or D), the gNB may not configure the BPs, or even if the BPs are configured, the UE may drop the BPs.
      • Alternatively, a method may be needed to select one of S/D (RRC or predefined). If S (or D) is assumed to be selected, for BPs where the per-BP config is not S (or D), the gNB may not configure the BPs, or even if the BPs are configured, the UE may drop the BPs.

    ♦ If the UE reports S, D, or B through the per-BC report,

      • A method may be needed to select one of S/D (RRC or predefined). If S (or D) is assumed to be selected, for BPs where the per-BP config is not S (or D), the gNB may not configure the BPs, or even if the BPs are configured, the UE may drop the BPs.

      • In this case, if the presence of concurrent transmission is reported (separately) on a per-BP basis, the per-BP report may be interpreted as overwriting the per-BC report (i.e., the per-BP report is applied regardless of the per-BC report) or adding the per-BC report (i.e., it is reported that the per-BC report and per-BP report are available when the per-BC report and per-BP report differ).

(3) When the gNB configures 'switchedUL' / 'dualUL' on a per-BC basis, but the gNB separately configures band pairs where concurrent UL transmission is possible (on 2 bands),

- If mixed is allowed,

  ▪ If the per-BP report for all bands only includes S or D, the per-BP report of the UE may be configured as it is, without a separate per-BC/BP config from the gNB. On the other hand, if the per-BP report of the UE includes at least one B, whether B is set to S or D may be configured only through the per-BC config, without the per-BP config. Alternatively, through both the per-BC config and per-BP config, some Bs may be set to S, while remaining Bs may be set to D.
  ▪ Alternatively,

    ♦ If the UE reports S, D, or B through the per-BP report,

      • If the per-BC config is S, D is assumed for BPs where concurrent transmission is configured by the per-BP config, and S is assumed for the other BPs. If the per-BC config is D, D may be assumed for all BPs.
      • Alternatively, if the per-BC config is S, D is assumed for BPs where concurrent transmission is configured by the per-BP config, and S is assumed for the other BPs. If the per-BC config is D, D is assumed for all BPs.

    ♦ If the UE reports S, D, or B through the per-BC report,

      • If the per-BC config is S, D is assumed for BPs where concurrent transmission is configured by the per-BP config, and S is assumed for the other BPs. If the per-BC config is D, D is assumed for all BPs.
      • In this case, if the presence of concurrent transmission is reported (separately) on a per-BP basis, the per-BP report may be interpreted as overwriting the per-BC report (i.e., the per-BP report is applied regardless of the per-BC report) or adding the per-BC report (i.e, it is reported that the per-BC report and per-BP report are available when the per-BC report and per-BP report differ).

-   If mixed is not allowed,

    ▪ If the per-BP report of the UE includes at least one S (or D) (and the rest are B), all bands may be set to S (or D) without a separate per-BC config or per-BP config from the gNB. On the other hand, if the per-BP report of the UE includes only B, whether all Bs are set to S or D may be configured by the per-BC config alone (without the per-BP config) (alternatively, in this case, it may be predetermined whether B is set to S or D (one of the two)).
    ▪ Alternatively,

        ♦ If the UE reports S, D, or B through the per-BP report,

        •   If the per-BC config is S, the UE may not expect concurrent transmission to be configured for a specific BP by the per-BP config, or the UE may ignore the specific BP even if configured.
        •   Alternatively, if the per-BC config is S, the UE may not expect concurrent transmission to be configured for a specific BP by the per-BP config, or the UE may ignore the specific BP even if configured.

        ♦ If the UE reports S, D, or B through the per-BC report,

        •   If the per-BC config is S, the UE may not expect concurrent transmission to be configured for a specific BP by the per-BP config, or the UE may ignore the specific BP even if configured.
        •   In this case, if the presence of concurrent transmission is reported (separately) on a per-BP basis, the per-BP report may be interpreted as overwriting the per-BC report (i.e., the per-BP report is applied regardless of the per-BC report) or adding the per-BC report (i.e., it is reported that the per-BC report and per-BP report are available when the per-BC report and per-BP report differ).

In the case of Alt2 related to UE reporting, if there is duplication between the per-BC report and the per-BP report for a specific band (pair), the operation for that band (pair) needs to be uniquely determined as either S, D, or B. For example, if the per-BC report is S and concurrent transmission is reported as possible for a specific band pair, the operation for the band pair may be determined as D or B. In another example, if the per-BC report is D and concurrent transmission is reported as possible for a specific band pair, the operation for the band pair may be determined as S or B. In a further example, if the per-BC report is B and concurrent transmission is reported as possible for a specific band pair, the operation for the band pair may be determined as D or S.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation example

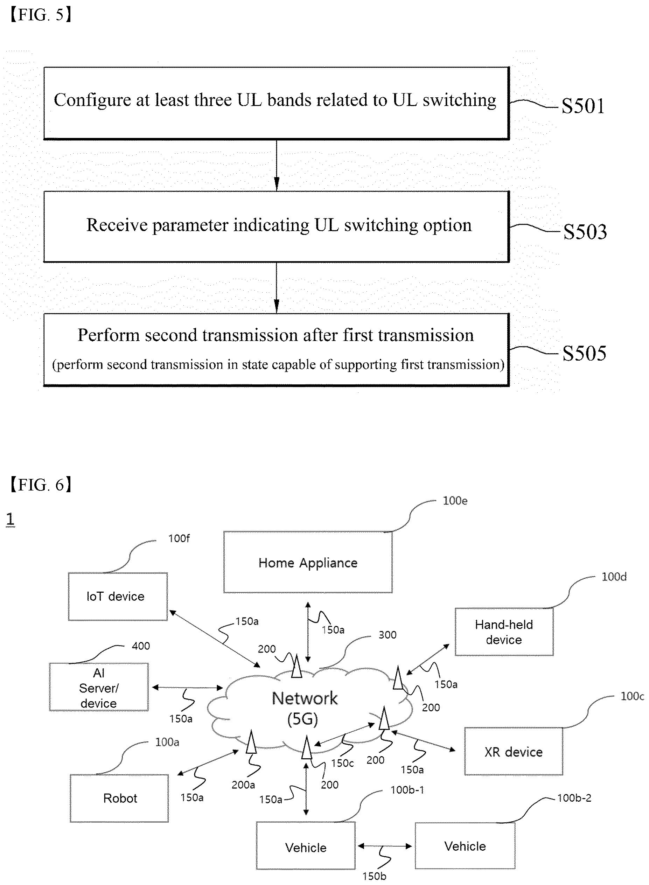

FIG. 5 is a flowchart of a signal transmission and reception method according to embodiments of the present disclosure.

Referring to FIG. 5, a signal transmission and reception method according to an embodiment of the present disclosure may be performed by a UE. The method may include the following: configuring at least three UL bands related to UL switching (S501); receiving a parameter indicating an option for UL switching (S503); and performing second transmission after first transmission (S505). A signal transmission and reception method by a BS corresponding to the embodiment of the present disclosure in FIG. 5 may include the following: configuring at least three UL bands related to UL switching for a UE (S501); transmitting a parameter indicating an option for UL switching (S503); and receiving second transmission after first transmission (S505).

In addition to the operations of FIG. 5, one or more of the operations described in Sections [1] to [3] may be performed.

Referring to Sections [1] to [3], the UE may be configured with three bands from Band A to Band C or four bands from Band A to Band D, related to UL switching. Band A to Band D may be referred to as first to fourth bands, respectively.

The parameter indicating the option for UL switching in FIG. 5 may be the RRC parameter uplinkTxSwitchingOption. As explained above, if uplink TxSwitchingOption is set to option 1 (switchedUL) for a cell group (via the CellGroupConfig parameter), the UE does not expect/perform concurrent transmission on two bands within the cell group. If uplinkTxSwitchingOption is set to option 2 (dualUL), the UE may expect/perform concurrent transmission on the two bands within the cell group.

Based on the contents of Sections [1] and [2], the state of Tx chains after the UL switching related to the first transmission and second transmission is determined based on which option is configured and which band 2-port transmission is allowed on. Here, the state of the Tx chains may be reported through the UE capability, based on which option is configured to the UE and which bands 2-port transmission is allowed on, to indicate the desired state of the Tx chains. The first transmission may actually be performed, but the second transmission may be performed without the first transmission, even if the UE is in a state where the UE may support the first transmission.

Referring to Section [1-9], if the parameter is set to option 1 for first and second bands, concurrent transmission may not be enabled on the first and second bands. In this case, the second band may be configured such that 2-port transmission is not allowed. Here, even if the parameter is set to option 1, the Tx chains related to the second band may be configured to be in the 1T- T-1T state. Therefore, after the UL switching, the two Tx chains may be configured as follows: one Tx chain is located on (or switched to) the second band, and the other Tx chain is located on a band other than the second band (or switched to the other band). As shown in FIG. 5, if the second transmission is performed after the first transmission, the UL switching triggered by the second transmission after the first transmission may cause one of the two Tx chains to switch to the second band and the other Tx chain to either remain on the first band or switch to a band other than the second band.

Since switching of the remaining Tx chain to the second band is restricted, the remaining Tx chain may switch to a band other than the second band among the at least three UL bands. Therefore, since the state of the Tx chains after the UL switching is not unique, the operation in section [1-5] may be referenced. Referring to section [1-5], a specific band may be selected (or configured) through a separate RRC parameter. The specific band may be referred to as an associated band, and the second parameter may be the RRC parameter AssociatedBand. Based on the configuration of the associated band, the UE may consider that 1-port transmission is performed on each carrier of the second band and the associated band for the UL switching. If the UE considers that 1-port transmission is performed on each carrier of the second band and the associated band, the remaining Tx chain among the two Tx chains may switch to the associated band. However, the associated band is considered to have 1-port transmission performed in relation to switching of the Tx chains, but no actual transmission is performed on the associated band.

Additionally, referring to Section [1-9], if the parameter is set to option 1 for the first and second bands, concurrent transmission may not be enabled on the first and second bands. In this case, the second band may be configured such that 2-port transmission is allowed. Since the parameter value is set to option 1, the Tx chains related to the second band may be configured to the 2T state. Therefore, after the UL switching, the two Tx chains may be positioned on the second band (or switched to a third band). As shown in FIG. 5, if the second transmission is performed after the first transmission, the UL switching triggered by the second transmission after the first transmission may cause both Tx chains to switch to the second band.

Additionally, referring to Section [1-5], 2-port transmission may not be allowed on all bands related to the UL switching. In this case, according to Method 1 in [1-8], all bands related to the UL switching may be set to the 1T-1T state.

Referring to section [2], if the parameter is set to option 2 for the first and second bands, concurrent transmission may be enabled on the first and second bands. In this case, the second band may be configured such that 2-port transmission is allowed. Even if the parameter value is set to option 2, the Tx chains related to the second band may be set to the 2T state. As shown in FIG. 5, if the second transmission is performed after the first transmission, the UL switching triggered by the second transmission after the first transmission may cause both Tx chains to switch to the second band.

In addition to the operations described with respect to FIGS. 5 and 6, one or more of the operations described with respect to FIGS. 1 to 4 and/or the operations described in sections [1] to [3] may be additionally performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

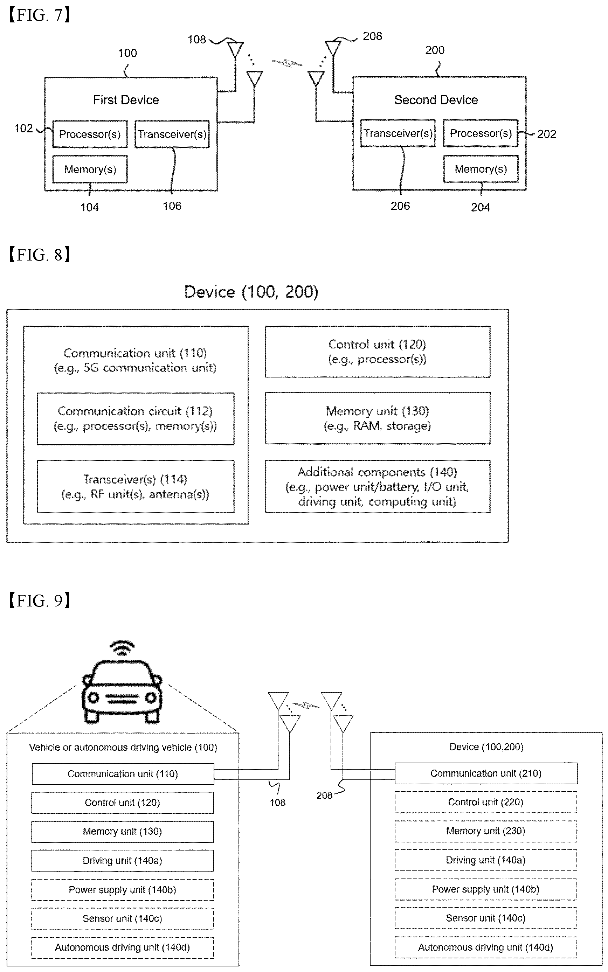

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1. A method of transmitting and receiving signals by a user equipment (UE) in a wireless communication system, the method comprising:

   configuring at least three uplink bands related to uplink switching, wherein the at least three uplink bands include a first band, a second band, and a third band;
   receiving a parameter indicating an option for the uplink switching; and
   performing second transmission on a carrier of the second band after performing first transmission on a carrier of the first band.
   wherein the uplink switching is related to the first transmission and the second transmission, and
   wherein a state of transmission (Tx) chains after the uplink switching is configured based on the option configured by the parameter and whether 2-port transmission is allowed on the second band.

2. The method of claim 1, wherein the state of the Tx chains that the UE intends to use is reported as a UE capability, based on the option configured by the parameter and whether the 2-port transmission is allowed on the second band.

3. The method of claim 1, wherein the state of the Tx chains is configured through radio resource control (RRC) signaling.

4. The method of claim 1, wherein based on that the parameter is set to option 1 and that the 2-port transmission is not allowed on the second band, the state of the Tx chains is configured such that:

   (i) one of two Tx chains switches to the second band, and the other Tx chain remains on the first band; or
   (ii) one of the two Tx chains switches to the second band, and the other Tx chain switches to a band other than the second band,

   wherein option 1 ensures that concurrent transmission is not performed on the first and second bands.

5. The method of claim 4, wherein based on that an associated band of the second band is configured by a second parameter, the UE considers that 1-port transmission is performed on each carrier of the second band and the associated band for the uplink switching.

6. The method of claim 5, wherein based on that the UE considers that the 1-port transmission is performed on each carrier of the second band and the associated band, the other Tx chain switches to the associated band.

7. The method of claim 1, wherein based on that the parameter is set to option 1 and that the 2-port transmission is allowed on the second band, the state of the Tx chains is configured such that two Tx chains switch to the second band, wherein option 1 ensures that concurrent transmission is not performed on the first and second bands.

8. The method of claim 1, wherein based on that the parameter is set to option 2 and that the 2-port transmission is allowed in the second band, the state of the Tx chains is configured such that two Tx chains switch to the second band, and
   wherein option 2 allows concurrent transmission to be performed on the first and second bands.

9. A user equipment (UE) configured to transmit and receive signals in a wireless communication system, the UE comprising:

   at least one transceiver;
   at least one processor; and
   at least one memory operably connected to the at least one processor and storing instructions that, when executed, cause the at least one processor to perform specific operations comprising:

   configuring at least three uplink bands related to uplink switching, wherein the at least three uplink bands include a first band, a second band, and a third band;
   receiving a parameter indicating an option for the uplink switching; and
   performing second transmission on a carrier of the second band after performing first transmission on a carrier of the first band.
   wherein the uplink switching is related to the first transmission and the second transmission, and
   wherein a state of transmission (Tx) chains after the uplink switching is configured based on the option configured by the parameter and whether 2-port transmission is allowed on the second band.

10. An apparatus for a user equipment (UE), the apparatus comprising:

   at least one processor; and
   at least one computer memory operably connected to the at least one processor and configured to, when executed, cause the at least one processor to perform operations comprising:

   configuring at least three uplink bands related to uplink switching, wherein the at least three uplink bands include a first band, a second band, and a third band;
   receiving a parameter indicating an option for the uplink switching; and
   performing second transmission on a carrier of the second band after performing first transmission on a carrier of the first band.
   wherein the uplink switching is related to the first transmission and the second transmission, and
   wherein a state of transmission (Tx) chains after the uplink switching is configured based on the option configured by the parameter and whether 2-port transmission is allowed on the second band.

11. A computer-readable non-volatile storage medium comprising at least one computer program configured to cause a user equipment (UE) having at least one processor to perform operations comprising:

> configuring at least three uplink bands related to uplink switching, wherein the at least three uplink bands include a first band, a second band, and a third band;
> receiving a parameter indicating an option for the uplink switching; and
> performing second transmission on a carrier of the second band after performing first transmission on a carrier of the first band.
> wherein the uplink switching is related to the first transmission and the second transmission, and
> wherein a state of transmission (Tx) chains after the uplink switching is configured based on the option configured by the parameter and whether 2-port transmission is allowed on the second band.

12. A method of transmitting and receiving signals by a base station (BS) in a wireless communication system, the method comprising:

> configuring at least three uplink bands related to uplink switching for a user equipment, wherein the at least three uplink bands include a first band, a second band, and a third band;
> transmitting a parameter indicating an option for the uplink switching; and
> receiving second transmission on a carrier of the second band after receiving first transmission on a carrier of the first band.
> wherein the uplink switching is related to the first transmission and the second transmission, and
> wherein a state of transmission (Tx) chains after the uplink switching is configured based on the option configured by the parameter and whether 2-port transmission is allowed on the second band.

13. A base station (BS) configured to transmit and receive signals in a wireless communication system, the BS comprising:

> at least one transceiver;
> at least one processor; and
> at least one memory operably connected to the at least one processor and storing instructions that, when executed, cause the at least one processor to perform specific operations comprising:

>> configuring at least three uplink bands related to uplink switching for a user equipment, wherein the at least three uplink bands include a first band, a second band, and a third band;
>> transmitting a parameter indicating an option for the uplink switching; and
>> receiving second transmission on a carrier of the second band after receiving first transmission on a carrier of the first band.
>> wherein the uplink switching is related to the first transmission and the second transmission, and
>> wherein a state of transmission (Tx) chains after the uplink switching is configured based on the option configured by the parameter and whether 2-port transmission is allowed on the second band.

【FIG. 1】

| One Frame (10ms) |
|:---:|

| Half-Frame (5ms) | Half-Frame (5ms) |
|:---:|:---:|

| Subframe 0 (1ms) | Subframe 4 (1ms) | Subframe 5 (1ms) | Subframe 9 (1ms) |
|:---:|:---:|:---:|:---:|

Subframe (1ms)

15KHz

| Slot (14 symbols) |
|:---:|

1ms

30KHz

| Slot 0 (14 symbols) | Slot 1 |
|:---:|:---:|

500us

60KHz

| Slot 0 (14 symbols) | Slot 1 | Slot 2 | Slot 3 |
|:---:|:---:|:---:|:---:|

250us

120KHz

| Slot 0 (14 symbols) | Slot 1 | Slot 2 | Slot 3 | Slot 4 | Slot 5 | Slot 6 | Slot 7 |
|:---:|:---:|:---:|:---:|:---:|:---:|:---:|:---:|

125us

【FIG. 2】

Resource grid

A carrier
(up to 3300 subcarriers, i. e., 275 RBs)

A BWP

1 RB = 12 subcarriers

1 RE

1 subcarrier

1 symbol

k = 0

l = 0 · · · ·

【FIG. 3】

Long PUCCH

PDCCH | Gap | PDSCH/PUSCH | Short PUCCH

Long PUCCH

One slot

f
t

【FIG. 4】

Port 1
Port 2
Carrier #1 (Band A)
Carrier #2 (Band B)

Port 1
Port 2
Carrier #1 (Band A)
Carrier #2 (Band B)

Previous transmission          Current transmission

(a)

Port 1
Port 2
Carrier #1 (Band A)
Carrier #2 (Band B)

Port 1
Port 2
Carrier #1 (Band A)
Carrier #2 (Band B)

Previous transmission          Current transmission

(b)

EP 4 615 120 A1

EP 4 615 120 A1

【FIG. 5】

Configure at least three UL bands related to UL switching — S501

Receive parameter indicating UL switching option — S503

Perform second transmission after first transmission
(perform second transmission in state capable of supporting first transmission) — S505

【FIG. 6】

34

【FIG. 7】

【FIG. 8】

Device (100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

【FIG. 9】

35

## INTERNATIONAL SEARCH REPORT

| | International application No. |
|---|---|
| | **PCT/KR2023/017264** |

**A. CLASSIFICATION OF SUBJECT MATTER**

**H04W 72/23**(2023.01)i; **H04W 72/21**(2023.01)i; **H04W 72/04**(2009.01)i; **H04W 8/24**(2009.01)i; **H04L 5/00**(2006.01)i

According to International Patent Classification (IPC) or to both national classification and IPC

**B. FIELDS SEARCHED**

Minimum documentation searched (classification system followed by classification symbols)

H04W 72/23(2023.01); H04B 7/04(2006.01); H04B 7/0456(2017.01); H04B 7/06(2006.01); H04W 72/02(2009.01); H04W 72/04(2009.01); H04W 76/16(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: band, switching, option, uplink, preference, report, transmit(Tx), chain, case, gap, carrier, radio resource control(RRC), signaling, 2-port, parameter

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0036346 A (QUALCOMM INCORPORATED) 02 April 2021 (2021-04-02) See paragraphs [0040]-[0064]; and figures 3-9. | 1-13 |
| Y | KR 10-2022-0104038 A (APPLE INC.) 25 July 2022 (2022-07-25) See paragraphs [0047]-[0140]; and figures 6-9. | 1-13 |
| A | JP 2009-542042 A (NOKIA CORPORATION) 26 November 2009 (2009-11-26) See paragraphs [0028]-[0071]; and figures 1-11. | 1-13 |
| A | KR 10-2013-0135275 A (PANASONIC CORPORATION) 10 December 2013 (2013-12-10) See paragraphs [0070]-[0201]; and figures 1-19. | 1-13 |
| A | US 2015-0181589 A1 (QUALCOMM INCORPORATED) 25 June 2015 (2015-06-25) See paragraphs [0065]-[0292]; and figures 1-29. | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2024** | **14 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/017264** |

| Patent document cited in search report | | | Publication date (day/month/year) | Patent family member(s) | | | Publication date (day/month/year) |
| --- | --- | --- | --- | --- | --- | --- | --- |
| KR | 10-2021-0036346 | A | 02 April 2021 | CN | 112514432 | A | 16 March 2021 |
| | | | | EP | 3831107 | A1 | 09 June 2021 |
| | | | | SG | 11202013161 | A | 30 March 2021 |
| | | | | TW | 202014039 | A | 01 April 2020 |
| | | | | US | 2020-0037383 | A1 | 30 January 2020 |
| | | | | WO | 2020-028366 | A1 | 06 February 2020 |
| KR | 10-2022-0104038 | A | 25 July 2022 | CL | 2022002175 | A1 | 24 March 2023 |
| | | | | CN | 114930924 | A | 19 August 2022 |
| | | | | CN | 117119608 | A | 24 November 2023 |
| | | | | EP | 4059278 | A1 | 21 September 2022 |
| | | | | EP | 4059278 | A4 | 02 August 2023 |
| | | | | JP | 2023-509673 | A | 09 March 2023 |
| | | | | US | 11653311 | B2 | 16 May 2023 |
| | | | | US | 2021-0258886 | A1 | 19 August 2021 |
| | | | | US | 2023-0337145 | A1 | 19 October 2023 |
| | | | | WO | 2021-159347 | A1 | 19 August 2021 |
| JP | 2009-542042 | A | 26 November 2009 | BR | PI0712242 | A2 | 14 February 2012 |
| | | | | BR | PI0712242 | B1 | 15 September 2020 |
| | | | | CN | 101849423 | A | 29 September 2010 |
| | | | | CN | 101849423 | B | 18 June 2014 |
| | | | | EP | 2022220 | A2 | 11 February 2009 |
| | | | | EP | 2022220 | B1 | 26 February 2020 |
| | | | | JP | 4951062 | B2 | 13 June 2012 |
| | | | | KR | 10-1082490 | B1 | 11 November 2011 |
| | | | | KR | 10-2009-0014204 | A | 06 February 2009 |
| | | | | MX | 2008014469 | A | 09 March 2009 |
| | | | | MY | 151793 | A | 14 July 2014 |
| | | | | RU | 2008148558 | A | 20 June 2010 |
| | | | | RU | 2411647 | C2 | 10 February 2011 |
| | | | | TW | 200807933 | A | 01 February 2008 |
| | | | | TW | I426730 | B | 11 February 2014 |
| | | | | US | 10225856 | B2 | 05 March 2019 |
| | | | | US | 2007-0265016 | A1 | 15 November 2007 |
| | | | | WO | 2007-132329 | A2 | 22 November 2007 |
| | | | | WO | 2007-132329 | A3 | 22 April 2010 |
| | | | | ZA | 200809643 | A | 27 October 2010 |
| KR | 10-2013-0135275 | A | 10 December 2013 | BR | 112013017256 | A2 | 25 October 2016 |
| | | | | BR | 112013017256 | A8 | 11 July 2017 |
| | | | | CN | 103283292 | A | 04 September 2013 |
| | | | | CN | 103283292 | B | 25 May 2016 |
| | | | | CN | 105812101 | A | 27 July 2016 |
| | | | | CN | 105812101 | B | 21 June 2019 |
| | | | | EP | 2663149 | A1 | 13 November 2013 |
| | | | | EP | 2663149 | B1 | 30 October 2019 |
| | | | | EP | 3598679 | A1 | 22 January 2020 |
| | | | | EP | 3598679 | B1 | 21 July 2021 |
| | | | | JP | 2014-045493 | A | 13 March 2014 |
| | | | | JP | 2015-111876 | A | 18 June 2015 |
| | | | | JP | 5398922 | B2 | 29 January 2014 |
| | | | | JP | 5684356 | B2 | 11 March 2015 |

Form PCT/ISA/210 (patent family annex) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| | | | | JP | 5878652 | B2 | 08 March 2016 |
| | | | | KR | 10-2019-0035901 | A | 03 April 2019 |
| | | | | KR | 10-2049729 | B1 | 28 November 2019 |
| | | | | MX | 2013007145 | A | 29 July 2013 |
| | | | | RU | 2013130668 | A | 10 February 2015 |
| | | | | RU | 2573639 | C2 | 27 January 2016 |
| | | | | TW | 201240509 | A | 01 October 2012 |
| | | | | TW | I543651 | B | 21 July 2016 |
| | | | | US | 10306607 | B2 | 28 May 2019 |
| | | | | US | 10694510 | B2 | 23 June 2020 |
| | | | | US | 11375485 | B2 | 28 June 2022 |
| | | | | US | 11716735 | B2 | 01 August 2023 |
| | | | | US | 2013-0250901 | A1 | 26 September 2013 |
| | | | | US | 2015-0016398 | A1 | 15 January 2015 |
| | | | | US | 2015-0271795 | A1 | 24 September 2015 |
| | | | | US | 2016-0165594 | A1 | 09 June 2016 |
| | | | | US | 2016-0381677 | A1 | 29 December 2016 |
| | | | | US | 2017-0230965 | A1 | 10 August 2017 |
| | | | | US | 2018-0049187 | A1 | 15 February 2018 |
| | | | | US | 2019-0246392 | A1 | 08 August 2019 |
| | | | | US | 2020-0275435 | A1 | 27 August 2020 |
| | | | | US | 2022-0295475 | A1 | 15 September 2022 |
| | | | | US | 8879497 | B2 | 04 November 2014 |
| | | | | US | 9077533 | B2 | 07 July 2015 |
| | | | | US | 9295054 | B2 | 22 March 2016 |
| | | | | US | 9467987 | B2 | 11 October 2016 |
| | | | | US | 9668249 | B2 | 30 May 2017 |
| | | | | US | 9820267 | B2 | 14 November 2017 |
| | | | | WO | 2012-093448 | A1 | 12 July 2012 |
| US | 2015-0181589 | A1 | 25 June 2015 | BR | 112016014396 | A2 | 08 August 2017 |
| | | | | BR | 112016014396 | B1 | 04 April 2023 |
| | | | | CA | 2930327 | A1 | 25 June 2015 |
| | | | | CA | 2930327 | C | 26 September 2023 |
| | | | | CN | 105830379 | A | 03 August 2016 |
| | | | | CN | 105830379 | B | 07 June 2019 |
| | | | | CN | 110086593 | A | 02 August 2019 |
| | | | | CN | 110086593 | B | 30 November 2021 |
| | | | | CN | 110190942 | A | 30 August 2019 |
| | | | | CN | 110190942 | B | 29 October 2021 |
| | | | | DK | 3085000 | T3 | 11 December 2017 |
| | | | | EP | 3085000 | A1 | 26 October 2016 |
| | | | | EP | 3085000 | B1 | 27 September 2017 |
| | | | | EP | 3379760 | A1 | 26 September 2018 |
| | | | | ES | 2651987 | T3 | 30 January 2018 |
| | | | | HU | E035255 | T2 | 02 May 2018 |
| | | | | JP | 2017-511006 | A | 13 April 2017 |
| | | | | JP | 2019-165454 | A | 26 September 2019 |
| | | | | JP | 6513678 | B2 | 15 May 2019 |
| | | | | JP | 6816198 | B2 | 20 January 2021 |
| | | | | KR | 10-2016-0099091 | A | 19 August 2016 |

Form PCT/ISA/210 (patent family annex) (July 2022)

## INTERNATIONAL SEARCH REPORT
### Information on patent family members

| International application No. |
|---|
| **PCT/KR2023/017264** |

| Patent document cited in search report | Publication date (day/month/year) | Patent family member(s) | | | Publication date (day/month/year) |
|---|---|---|---|---|---|
| | | KR | 10-2362637 | B1 | 11 February 2022 |
| | | PL | 3085000 | T3 | 30 March 2018 |
| | | US | 11743897 | B2 | 29 August 2023 |
| | | WO | 2015-094816 | A1 | 25 June 2015 |